(19) Europäisches Patentamt
European Patent Office
Office européen des brevets

(11) **EP 3 573 258 B1**

(12) **EUROPEAN PATENT SPECIFICATION**

(45) Date of publication and mention of the grant of the patent:
**17.03.2021 Bulletin 2021/11**

(51) Int Cl.:
***H04B 10/40*** *(2013.01)*    ***G02B 6/42*** *(2006.01)*

(21) Application number: **17899120.4**

(22) Date of filing: **28.02.2017**

(86) International application number:
**PCT/CN2017/075273**

(87) International publication number:
**WO 2018/157317 (07.09.2018 Gazette 2018/36)**

(54) **PASSIVE OPTICAL NETWORK SYSTEM, AND OPTICAL COMPONENT AND MATCHING IMPEDANCE ADJUSTMENT METHOD THEREFOR**

PASSIVES OPTISCHES NETZWERKSYSTEM UND OPTISCHE KOMPONENTE UND PASSENDES IMPEDANZANPASSUNGSVERFAHREN DAFÜR

SYSTÈME DE RÉSEAU OPTIQUE PASSIF, ET COMPOSANT OPTIQUE ET SON PROCÉDÉ DE RÉGLAGE D'IMPÉDANCE D'ADAPTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.11.2019 Bulletin 2019/48**

(73) Proprietor: **Huawei Technologies Co., Ltd.**
**Longgang District**
**Shenzhen, Guangdong 518129 (CN)**

(72) Inventors:
• **XU, Zhiguang**
**Shenzhen**
**Guangdong 518129 (CN)**
• **WEN, Yue**
**Shenzhen**
**Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A2-2004/002023     CN-A- 103 650 388
CN-A- 106 059 673     CN-A- 106 059 673
CN-A- 106 125 213     US-A1- 2004 202 214
US-A1- 2004 202 214

**Description**

**TECHNICAL FIELD**

The present invention relates to the field of optical communications technologies, and in particular, to a passive optical network system, an optical assembly, and a method for adjusting matched impedance of the optical assembly.

**BACKGROUND**

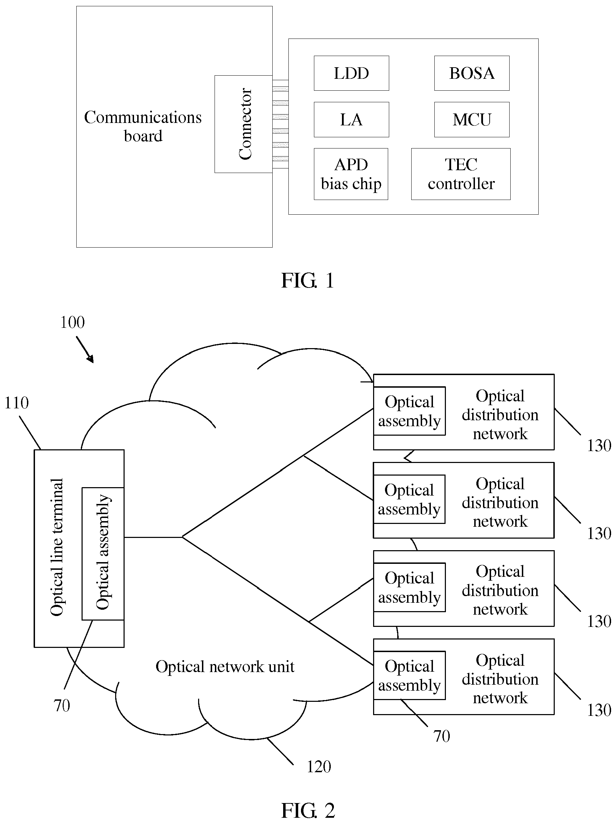

In a conventional optical assembly, a pluggable connection is formed between an optical module and a connector on a communications board by using an edge connector. The optical module includes optical components and electronic chips such as a bidirectional optical subassembly (Bidirectional Optical Sub Assembly, BOSA), a laser diode driver (Laser Diode Driver, LDD), a limiting amplifier (Limiting Amplifier, LA), a micro controller (Micro Control Unit, MCU), an avalanche photodiode (Avalanche Photodiode, APD) bias chip, and a thermoelectric cooler (Thermoelectric Cooler, TEC) controller, as shown in FIG. 1.

As a rate of the optical module increases, new functions are implemented, and a quantity of channels increases, power consumption of the optical module continuously increases. However, power consumption supported by conventional optical modules such as a small form-factor pluggable (Small Form Factor Pluggable, SFP) transceiver and a 10 Gigabit small form-factor pluggable (10 Gigabit Small Form Factor Pluggable, XFP) transceiver is limited. When a plurality of optical modules are inserted into a same communications board at the same time, an operating temperature supported by the optical modules can hardly meet a test result of a single module due to factors such as close distances between the optical modules, a high temperature in a chassis, and a poor heat dissipation condition. If optical modules supporting a higher operating temperature are produced, undoubtedly, optical module manufacturers have to bear higher costs. In addition, manufacturers of devices that use the optical modules cannot design communications boards based on optimal performance of the devices. Consequently, optimal capabilities of the communications boards cannot be fully exerted, increasing costs for the device manufacturers An optical assembly according to the state of the art is known from CN-A-106059673.

**SUMMARY**

Embodiments of the present invention provide a passive optical network system, an optical assembly, and a method for adjusting matched impedance of the optical assembly, to reduce power consumption of an optical module in the optical assembly and improve a port density of a communications board in the optical assembly, thereby improving resource utilization of the passive optical network system.

A first aspect of the embodiments of the present invention provides an optical assembly, including an optical module and a communications board. An optical component, a first memory, and an edge connector connected to the optical component and the first memory are disposed on the optical module, and the first memory is configured to store a first scattering parameter of the optical module and an operating parameter of the optical component. A connector, and an electronic chip and a matching network that correspond to the optical component are disposed on the communications board, and the optical module is connected to the connector by using the edge connector. The electronic chip includes a micro controller and a laser diode driver. The micro controller is electrically connected to the laser diode driver and the matching network, the laser diode driver is connected to the connector via the matching network, and the communications board stores a second scattering parameter that is between the laser diode driver and the connector. The micro controller is configured to: read the first scattering parameter from the first memory, calculate a third scattering parameter that is between the laser diode driver and the optical module based on the first scattering parameter and the second scattering parameter, and further adjust matched impedance of the matching network based on the third scattering parameter.

In this embodiment of the present invention, the electronic chip corresponding to the optical component is disposed on the communications board. This helps reduce power consumption of the optical module and improve port density of the communications board, thereby improving resource utilization. In addition, the operating parameter of the optical component and the first scattering parameter of the optical module are stored in the first memory of the optical module. When an optical module including a different optical component is inserted into the communications board, the third scattering parameter that is between the laser diode driver and the optical module is calculated by reading the first scattering parameter stored in the first memory and the second scattering parameter that is between the laser diode driver and the connector and that is stored on the communications board, and then the matched impedance of the matching network is adjusted based on the third scattering parameter. Therefore, the matched impedance of the matching network can be adjusted based on different optical modules, to enable matched impedance between the laser diode driver and the optical module to meet an impedance matching requirement, thereby improving signal quality of the optical assembly.

In an implementation, the electronic chip further includes: an avalanche photodiode bias chip, configured to provide a bias voltage for the optical component; a limiting amplifier, configured to amplify a signal received by the optical component; and a thermoelectric cooler control chip, configured to provide a cooling current or a heating current for the optical module.

In an implementation, the operating parameter of the optical component includes a bias current, a modulated current, a modulated voltage, an operating temperature, and a backlight diode current; the micro controller is further configured to: read the operating parameter from the first memory and configure the laser diode driver and the limiting amplifier based on the operating parameter; and the laser diode driver is configured to drive the optical component to transmit an optical signal.

In an implementation, the calculating a third scattering parameter that is between the laser diode driver and the optical module based on the first scattering parameter and the second scattering parameter includes: converting the first scattering parameter into a corresponding first scattering transmission parameter, and converting the second scattering parameter into a second scattering transmission parameter; multiplying the first scattering transmission parameter by the second scattering transmission parameter, to obtain a third scattering transmission parameter; and converting the third scattering transmission parameter into the corresponding third scattering parameter.

In this implementation, both the first scattering parameter and the second scattering parameter are known. The first scattering parameter and the second scattering parameter are respectively converted into the corresponding first scattering transmission parameter and second scattering transmission parameter, and then the two scattering transmission parameters are multiplied to obtain the third scattering transmission parameter that is between the laser diode driver and the optical module. The third scattering transmission parameter is converted into the third scattering parameter that is between the laser diode driver and the optical module. Therefore, a scattering parameter that is between the laser diode driver and the optical module can be easily obtained for different impedance matching conditions, so that it is convenient to determine, based on the scattering parameter, whether the matched impedance of the matching network meets a requirement, and when the matched impedance does not meet the requirement, control the matching network to adjust the matched impedance.

In an implementation, the matching network includes one or a combination of more of a resistor, an inductor, and a capacitor connected in series and/or connected in parallel, and the adjusting matched impedance of the matching network is adjusting a value of the resistor, the inductor, or the capacitor.

In an implementation, the optical component includes a bidirectional optical subassembly BOSA, or the optical component includes a transmitter optical subassembly TOSA and a receiver optical subassembly ROSA.

A second aspect of the embodiments of the present invention provides an optical assembly, including an optical module and a communications board. An optical component, a first memory, and an edge connector connected to the optical component and the first memory are disposed on the optical module, the first memory is configured to store an operating parameter of the optical component, and the operating parameter includes a preset eye mask margin. A connector, and an electronic chip and a matching network that correspond to the optical component are disposed on the communications board, and the optical module is connected to the connector by using the edge connector. The electronic chip includes a micro controller, a laser diode driver, and an eye opening monitoring module; the micro controller is electrically connected to the laser diode driver, the eye opening monitoring module, and the matching network; and the laser diode driver is connected to the connector via the matching network. The eye opening monitoring module is configured to: read an electrical signal output by a monitor photodiode in the optical component, and measure, based on the electrical signal, an eye opening of a signal transmitted by the optical component. The micro controller is configured to: read the eye opening and the preset eye mask margin, and adjust matched impedance of the matching network based on the eye opening and the preset eye mask margin.

In this embodiment of the present invention, the eye opening of the signal transmitted by the optical component is measured, and an eye mask margin of the signal transmitted by the optical component is calculated based on the eye opening and a preset eye pattern mask. Further, whether the eye mask margin of the signal transmitted by the optical component falls within a preset eye mask margin range is determined. If the eye mask margin of the signal transmitted by the optical component falls within the preset eye mask margin range, it indicates that quality of the signal transmitted by the optical component meets a requirement. In other words, current matched impedance of the matching network already meets an impedance matching requirement, so that no adjustment is needed. If the eye mask margin of the signal transmitted by the optical component falls outside the preset eye mask margin range, it indicates that quality of the signal transmitted by the optical component does not meet a requirement, so that the matched impedance of the matching network needs to be adjusted, to improve the quality of the transmitted signal.

In an implementation, the electronic chip further includes: an avalanche photodiode bias chip, configured to provide a bias voltage for the optical component; a limiting amplifier, configured to amplify a signal received by the optical component; and a thermoelectric cooler control chip, configured to provide a cooling current or a heating current for the optical module.

In an implementation, the operating parameter of the optical component further includes a bias current, a modulated current, a modulated voltage, an operating temperature, a backlight diode current, and a monitor photodiode current; the micro controller is further configured to configure the laser diode driver and the limiting amplifier based on the operating parameter; and the laser diode driver is configured to drive the optical component to transmit an optical signal.

In an implementation, the matching network includes one or a combination of more of a resistor, an inductor, and a capacitor connected in series and/or connected in parallel, and the adjusting matched impedance of the matching network is adjusting a value of the resistor, the inductor, or the capacitor.

In an implementation, the optical component includes a bidirectional optical subassembly BOSA, or the optical component includes a transmitter optical subassembly TOSA and a receiver optical subassembly ROSA.

A third aspect of the embodiments of the present invention provides a passive optical network system, including an optical line terminal, an optical distribution network, and an optical network unit. The optical line terminal is connected to the optical network unit via the optical distribution network, and the optical line terminal includes the optical assembly according to any one of the first aspect or the implementations of the first aspect of the embodiments of the present invention, and/or the optical network unit includes the optical assembly according to any one of the second aspect or the implementations of the second aspect of the embodiments of the present invention.

A fourth aspect of the embodiments of the present invention provides a method for adjusting matched impedance of the optical assembly according to any one of the first aspect or the implementations of the first aspect of the embodiments of the present invention, including:

when an optical module is inserted into a communications board, reading a first scattering parameter of the optical module stored in a first memory of the optical module;
reading a second scattering parameter that is between a laser diode driver and a connector and that is stored on the communications board;
calculating a third scattering parameter that is between the laser diode driver and the optical module based on the first scattering parameter and the second scattering parameter; and
adjusting matched impedance of a matching network of the optical assembly based on the third scattering parameter.

In an implementation, the calculating a third scattering parameter that is between the laser diode driver and the optical module based on the first scattering parameter and the second scattering parameter includes:

converting the first scattering parameter into a corresponding first scattering transmission parameter, and converting the second scattering parameter into a second scattering transmission parameter;
multiplying the first scattering transmission parameter by the second scattering transmission parameter, to obtain a third scattering transmission parameter; and
converting the third scattering transmission parameter into the corresponding third scattering parameter.

In an implementation, the adjusting matched impedance of a matching network of the optical assembly based on the third scattering parameter includes:

calculating a 3-dB bandwidth of a curve corresponding to the third scattering parameter;
determining whether the 3-dB bandwidth of the curve corresponding to the third scattering parameter falls within a preset 3-dB bandwidth range; and
if the 3-dB bandwidth of the curve corresponding to the third scattering parameter falls outside the preset 3-dB bandwidth range, adjusting matched impedance of the optical assembly by adjusting a value of a resistor, an inductor, or a capacitor in the matching network on the communications board.

A fifth aspect of the embodiments of the present invention provides a method for adjusting matched impedance of the optical assembly according to any one of the second aspect or the implementations of the second aspect of the embodiments of the present invention, including:

when an optical module is inserted into a communications board, reading an operating parameter of an optical component stored in a first memory of the optical module, where the operating parameter includes a preset eye mask margin;
configuring an output parameter of a laser diode driver on the communications board based on the operating parameter of the optical component, and driving, by using the laser diode driver, the optical component to transmit an optical signal;
reading an electrical signal output by a monitor photodiode in the optical component, and measuring, based on the electrical signal, an eye opening of the signal transmitted by the optical component; and
reading the eye opening and the preset eye mask margin, and adjusting matched impedance of the matching network based on the eye opening and the preset eye mask margin.

In an implementation, the adjusting matched impedance of the matching network based on the eye opening and the preset eye mask margin includes:

calculating, based on the eye opening, an eye mask margin of the signal transmitted by the optical component;
determining whether the eye mask margin of the signal transmitted by the optical component falls within a preset eye mask margin range; and
if the eye mask margin of the signal transmitted by the optical component falls outside the preset eye mask margin range, adjusting the matched impedance of the optical assembly by adjusting a value of a resistor, an inductor, or a capacitor in the matching network on the communications board.

A sixth aspect of the embodiments of the present invention provides an apparatus for adjusting matched impedance of the optical assembly according to any one of the first aspect or the implementations of the first aspect of the embodiments of the present invention, including:

a first-scattering-parameter reading unit, configured to: when an optical module is inserted into a communications board, read a first scattering parameter of the optical module stored in a first memory of the optical module;
a second-scattering-parameter reading unit, configured to read a second scattering parameter that is between a laser diode driver and a connector and that is stored on the communications board;
a third-scattering-parameter calculation unit, configured to calculate a third scattering parameter that is between the laser diode driver and the optical module based on the first scattering parameter and the second scattering parameter; and
a matched impedance adjustment unit, configured to adjust matched impedance of a matching network of the optical assembly based on the third scattering parameter.

In an implementation, the third-scattering-parameter calculation unit is specifically configured to:

convert the first scattering parameter into a corresponding first scattering transmission parameter, and convert the second scattering parameter into a second scattering transmission parameter;
multiply the first scattering transmission parameter by the second scattering transmission parameter, to obtain a third scattering transmission parameter; and
convert the third scattering transmission parameter into the corresponding third scattering parameter.

In an implementation, the matched impedance adjustment unit is specifically configured to:

calculate a 3-dB bandwidth of a curve corresponding to the third scattering parameter;
determine whether the 3-dB bandwidth of the curve corresponding to the third scattering parameter falls within a preset 3-dB bandwidth range; and
if the 3-dB bandwidth of the curve corresponding to the third scattering parameter falls outside the preset 3-dB bandwidth range, adjust the matched impedance of the optical assembly by adjusting a value of a resistor, an inductor, or a capacitor in the matching network on the communications board.

A seventh aspect of the embodiments of the present invention provides an apparatus for adjusting matched impedance of the optical assembly according to any one of the second aspect or the implementations of the second aspect of the embodiments of the present invention, including:

an operating parameter reading unit, configured to: when an optical module is inserted into a communications board, read an operating parameter of an optical component stored in a first memory of the optical module, where the operating parameter includes a preset eye mask margin;
an output parameter configuration unit, configured to configure an output parameter of a laser diode driver on the communications board based on the operating parameter of the optical component, and drive, by using the laser diode driver, the optical component to transmit an optical signal;
an eye opening measurement unit, configured to: read an electrical signal output by a monitor photodiode in the optical component, and measure, based on the electrical signal, an eye opening of the signal transmitted by the optical component; and

a matched impedance adjustment unit, configured to: read the eye opening and the preset eye mask margin, and adjust matched impedance of the matching network based on the eye opening and the preset eye mask margin.

In an implementation, the matched impedance adjustment unit is specifically configured to:

calculate, based on the eye opening, an eye mask margin of the signal transmitted by the optical component; determine whether the eye mask margin of the signal transmitted by the optical component falls within a preset eye mask margin range; and

if the eye mask margin of the signal transmitted by the optical component falls outside the preset eye mask margin range, adjust the matched impedance of the optical assembly by adjusting a value of a resistor, an inductor, or a capacitor in the matching network on the communications board.

## BRIEF DESCRIPTION OF DRAWINGS

To describe the technical solutions in the embodiments of the present invention more clearly, the following briefly describes the accompanying drawings required for describing the prior art and the embodiments of the present invention.

FIG. 1 is a schematic structural diagram of a conventional optical assembly;

FIG. 2 is a schematic structural diagram of a passive optical network system according to an embodiment of the present invention;

FIG. 3 is a first schematic structural diagram of an optical assembly according to an embodiment of the present invention;

FIG. 4 is a second schematic structural diagram of an optical assembly according to an embodiment of the present invention;

FIG. 5 is a first schematic flowchart of a method for adjusting matched impedance of an optical assembly according to an embodiment of the present invention;

FIG. 6 is a second schematic flowchart of a method for adjusting matched impedance of an optical assembly according to an embodiment of the present invention;

FIG. 7 is a first schematic structural diagram of an apparatus for adjusting matched impedance of an optical assembly according to an embodiment of the present invention; and

FIG. 8 is a second schematic structural diagram of an apparatus for adjusting matched impedance of an optical assembly according to an embodiment of the present invention.

## DESCRIPTION OF EMBODIMENTS

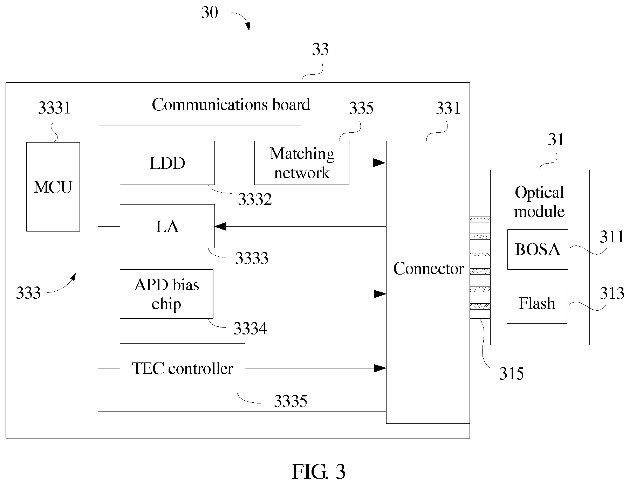

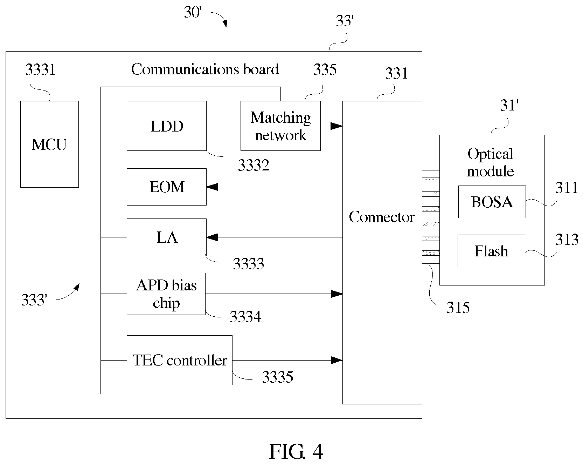

The following describes the embodiments of the present invention with reference to the accompanying drawings.
Referring to FIG. 2, an embodiment of the present invention provides a passive optical network (Passive Optical Network, PON) system 100, including at least one optical line terminal (Optical Line Terminal, OLT) 110, one optical distribution network (Optical Distribution Network, ODN) 120, and a plurality of optical network units (Optical Network Unit, ONU) 130. The optical line terminal OLT is connected to the optical network units ONUs via the optical distribution network ODN. The optical line terminal OLT includes an optical assembly 30 described in an embodiment of FIG. 3 or an optical assembly 40 described in an embodiment of FIG. 4, and/or the optical network units ONUs each include the optical assembly 30 described in the embodiment of FIG. 3 or the optical assembly 40 described in the embodiment of FIG. 4. For a specific structure of the optical assembly 30, refer to related descriptions in the embodiment shown in FIG. 3. For a specific structure of the optical assembly 40, refer to related descriptions in the embodiment shown in FIG. 4.
A direction from the optical line terminal OLT to the optical network unit ONU is defined as a downstream direction, and a direction from the optical network unit ONU to the optical line terminal OLT is defined as an upstream direction. In the downstream direction, the optical line terminal OLT broadcasts downstream data to the plurality of optical network units ONUs in a time division multiplexing (Time Division Multiplexing, TDM) manner, and each optical network unit ONU receives only data that carries an identifier of the optical network unit ONU. In the upstream direction, the plurality of optical network units ONUs communicate with the optical line terminal OLT in a time division multiple access TDMA manner, and each optical network unit ONU sends upstream data in strict accordance with a slot allocated by the optical line terminal OLT. By using the foregoing mechanism, downstream optical signals sent by the optical line terminal OLT are continuous optical signals, and upstream optical signals sent by the optical network units ONUs are burst optical signals.
The passive optical network system 100 may be a communications network for distributing data between the optical line terminal OLT and the optical network units ONUs without requiring any active component. For example, in a specific embodiment, data between the optical line terminal OLT and the optical network units ONUs may be distributed by using a passive optical component (for example, an optical splitter) in the ODN. In addition, the passive optical network system 100 may be an asynchronous transfer mode passive optical network (ATM PON) system or a broadband passive optical network (BPON) system defined in the ITU-T G.983 standard, a gigabit-capable passive optical network (GPON) system defined in the ITU-T G.984 standard, an Ethernet passive optical network (EPON) defined in the IEEE 802.3ah standard, or a next-generation passive optical network (NG PON, for example, an XGPON or a 10G EPON). All content of the various passive optical network systems defined in the foregoing standards is incorporated in this application document by reference.

The optical line terminal OLT is usually located in a central office (Central Office, CO). The optical line terminal OLT can manage the plurality of optical network units ONUs together, and transmit data between the optical network units ONUs and an upper-layer network. Specifically, the optical line terminal OLT may serve as a medium between the optical network units ONUs and the upper-layer network (for example, the Internet and a public switched telephone network (Public Switched Telephone Network, PSTN)), to forward data received from the upper-layer network to the optical network units ONUs and forward data received from the optical network units ONUs to the upper-layer network. A specific structural configuration of the optical line terminal OLT may vary with a specific type of the passive optical network 100. For example, in an embodiment, the optical line terminal OLT may include a transmitter and a receiver. The transmitter is configured to send continuous downstream optical signals to the optical network units ONUs, and the receiver is configured to receive burst upstream optical signals from the optical network units ONUs. The downstream optical signals and the upstream optical signal may be transmitted over the optical distribution network.

The optical network units ONUs may be disposed at user-side locations (for example, customer premises) in a distributed manner. The optical network units ONUs may be network devices used for communication between the optical line terminal OLT and a user. Specifically, the optical network units ONUs may serve as media between the optical line terminal OLT and the user. For example, the optical network units ONUs may forward data received from the optical line terminal OLT to the user, and forward data received from the user to the optical line terminal OLT. It can be understood that a structure of the optical network unit ONU is similar to that of an optical network terminal (Optical Network Terminal, ONT). Therefore, in the solutions provided in this application document, the optical network unit and the optical network terminal are interchangeable.

The ODN may be a data distribution system, and may include an optical fiber, an optical coupler, an optical splitter, and/or another device. In an embodiment, the optical fiber, the optical coupler, the optical splitter, and/or the another device each may be a passive optical component. Specifically, the optical fiber, the optical coupler, the optical splitter, and/or the another device each may be a component that distributes a data signal between the optical line terminal OLT and the optical network units ONUs without support of a power supply. Specifically, an optical splitter (Optical Splitter) is used as an example. The optical splitter may be connected to the optical line terminal OLT by using a feeder optical fiber, and connected to the plurality of optical network units ONUs respectively by using a plurality of distribution fibers, to implement a point-to-multipoint connection between the optical line terminal OLT and the optical network units ONUs. In addition, in another embodiment, the ODN may further include one or more processing devices, for example, an optical amplifier or a relay device (Relay device). In addition, the ODN may specifically extend from the optical line terminal OLT to the plurality of optical network units ONUs, or may be configured as any other point-to-multipoint structure.

Referring to FIG. 3, an embodiment of the present invention provides an optical assembly 30, including an optical module 31 and a communications board 33. An optical component 311, a first memory 313, and an edge connector 315 connected to the optical component 311 and the first memory 313 are disposed on the optical module 31, and the first memory 313 is configured to store a first scattering parameter S1 of the optical module 31 and an operating parameter of the optical component 311. In this embodiment, the first scattering parameter S1 is a scattering parameter (S parameter) of the optical module 31, including a backward transmission (isolation) coefficient $S1_{12}$, a forward transmission (gain) coefficient $S1_{21}$, an input reflection (input return loss) coefficient $S1_{11}$, and an output reflection (output return loss) coefficient $S1_{22}$. The operating parameter of the optical component 311 includes a bias current, a modulated current, a modulated voltage, an operating temperature, and a backlight diode current. The optical component 311 includes a bidirectional optical subassembly BOSA, or the optical component 311 may include a transmitter optical subassembly TOSA and a receiver optical subassembly ROSA.

A connector 331, and an electronic chip 333 and a matching network 335 that correspond to the optical component are disposed on the communications board 33. The optical module 31 is connected to the connector 331 by using the edge connector 315. In other words, a pluggable connection is formed between the optical module 31 and the communications board 33 by using the edge connector 315. The electronic chip 333 includes a micro controller (Micro Control Unit, MCU) 3331, a laser diode driver (Laser Diode Driver, LDD) 3332, a limiting amplifier (Limiting Amplifier, LA) 3333, an avalanche photodiode (Avalanche Photodiode, APD) bias chip 3334, and a thermoelectric cooler (Thermoelectric Cooler, TEC) control chip 3335. The micro controller 3331 is electrically connected to the laser diode driver 3332, the limiting amplifier 3333, the avalanche photodiode bias chip 3334, the thermoelectric cooler control chip 3335, and the matching network 335, and is electrically connected to the first memory 313 by using the connector 331 and the edge connector 315. The laser diode driver 3332 is connected to the connector 331 via the matching network 335. In this embodiment, the micro controller 3331 is electrically connected to another chip on the communications board 33 and the first memory 313 on the optical module 31 by using a control bus (for example, an $I^2C$ bus).

The micro controller 3331 is configured to: read the operating parameter from the first memory 313, and configure the laser diode driver 3332 and the limiting amplifier 3333 based on the operating parameter. The laser diode driver 3332 is configured to drive the optical component 311 to transmit an optical signal. The limiting amplifier 3333 is configured to amplify a signal received by the optical component 311. The avalanche photodiode bias chip 3334 is configured to provide a bias voltage for the optical component 311. The thermoelectric cooler control chip 3335 is configured to provide a cooling current or a heating current for the optical module.

The communications board 33 stores a second scattering parameter S2 that is between the laser diode driver 3332 and the connector 331. It can be understood that the second scattering parameter S2 may be stored in built-in storage space of the micro controller 3331 or in a second memory (not shown in the figure) disposed on the communications board 33. In this embodiment, the second scattering parameter S2 is a scattering parameter (S parameter) between an output end of the laser diode driver 3332 and an end that is of the connector 331 and that is connected to the edge connector 315. In other words, the second scattering parameter includes a scattering parameter of the connector 331. Likewise, the second scattering parameter also includes a backward transmission coefficient $S2_{12}$, a forward transmission coefficient $S2_{21}$, an input reflection coefficient $S2_{11}$, and an output reflection coefficient $S2_{22}$.

The micro controller 3331 is further configured to: read the first scattering parameter from the first memory 313, calculate a third scattering parameter S3 that is between the laser diode driver 3332 and the optical module 31 based on the first scattering parameter and the second scattering parameter, and further adjust matched impedance of the matching network 335 based on the third scattering parameter S3. In this embodiment, the third scattering parameter S3 is a scattering parameter (S parameter) between the output end of the laser diode driver 3332 and an output end of the optical module 31. In other words, the third scattering parameter includes a scattering parameter of the optical module 31. Likewise, the third scattering parameter also includes a backward transmission coefficient $S3_{12}$, a forward transmission coefficient $S3_{21}$, an input reflection coefficient $S3_{11}$, and an output reflection coefficient $S3_{22}$.

In an implementation, the calculating a third scattering parameter that is between the laser diode driver and the optical module based on the first scattering parameter and the second scattering parameter includes:

converting the first scattering parameter into a corresponding first scattering transmission parameter, and converting the second scattering parameter into a second scattering transmission parameter, where the scattering transmission parameter is also referred to as a T parameter, and the T parameter may be obtained by converting the corresponding S parameter;

multiplying the first scattering transmission parameter by the second scattering transmission parameter, to obtain a third scattering transmission parameter; and

converting the third scattering transmission parameter into the corresponding third scattering parameter.

Specifically, the first scattering parameter is used as an example. The first scattering parameter may be converted into the corresponding first scattering transmission parameter according to the following formulas based on the backward transmission coefficient $S1_{12}$, the forward transmission coefficient $S1_{21}$, the input reflection coefficient $S1_{11}$, and the output reflection coefficient $S1_{22}$:

$$T1_{11} = S1_{12} - \frac{S1_{22}S1_{11}}{S1_{21}}, \quad T1_{12} = \frac{S1_{11}}{S1_{21}}, \quad T1_{21} = -\frac{S1_{22}}{S1_{21}}, \text{ and } \quad T1_{22} = \frac{1}{S1_{21}}.$$

It is assumed that the first scattering transmission parameter is T1. Likewise, the second scattering transmission parameter T2 corresponding to the second scattering parameter may be calculated according to the foregoing formulas. Then, the third scattering transmission parameter is: $T_3 = T_1 \cdot T_2$.

Further, the third scattering transmission parameter may be converted into the corresponding third scattering parameter by using the following formulas:

$$S3_{21} = \frac{1}{T3_{22}}, \quad S3_{22} = -\frac{T3_{21}}{T3_{22}}, \quad S3_{11} = \frac{T3_{12}}{T3_{22}},$$

and $S3_{12}=T3_{11}-T3_{21}*T3_{12}/T3_{22}$, where $S3_{12}$ is the backward transmission coefficient of the third scattering parameter, $S3_{21}$ is the forward transmission coefficient of the third scattering parameter, $S3_{11}$ is the input reflection coefficient of the third scattering parameter, and $S3_{22}$ is the output reflection coefficient of the third scattering parameter.

It can be understood that the matching network 335 may include one or a combination of more of a resistor, an inductor, and a capacitor connected in series and/or connected in parallel, and the adjusting matched impedance of the matching network 335 is adjusting a value of the resistor, the inductor, or the capacitor. In this embodiment, a value of at least one resistor, at least one inductor, or at least one capacitor in the matching network 335 is electrically adjustable.

In an implementation, the adjusting matched impedance of the matching network of the optical assembly based on the third scattering parameter includes:

calculating a 3-dB bandwidth of a curve corresponding to the third scattering parameter;
determining whether the 3-dB bandwidth of the curve corresponding to the third scattering parameter falls within a preset 3-dB bandwidth range; and
if the 3-dB bandwidth of the curve corresponding to the third scattering parameter falls outside the preset 3-dB bandwidth range, adjusting the matched impedance of the optical assembly by adjusting the value of the resistor, the inductor, or the capacitor in the matching network on the communications board.

For example, a curve of the input reflection coefficient $S3_{11}$ of the third scattering parameter, namely, an input return loss curve between the output end of the laser diode driver and the output end of the optical module, is generated. Then, a 3-dB bandwidth of the input return loss curve is calculated, and the 3-dB bandwidth of the input return loss curve is compared with the preset 3-dB bandwidth range. If the 3-dB bandwidth of the input return loss curve falls outside the preset 3-dB bandwidth range, it indicates that current matched impedance of the matching network needs to be adjusted. The micro controller may then control the electrically adjustable resistor, inductor, or capacitor in the matching network to change the value, thereby adjusting the matched impedance of the matching network.

It can be understood that because operating parameters of optical components produced by different manufacturers may be different, and the operating parameter of the optical component and the first scattering parameter of the optical module are stored in the first memory of the optical module, when an optical module including an optical component of a different manufacturer is inserted into the communications board, the third scattering parameter between the laser diode driver and the optical module is calculated by reading the first scattering parameter stored in the first memory and the second scattering parameter that is between the laser diode driver and the connector and that is stored on the communications board, and then the matched impedance of the matching network 335 between the laser diode driver and the connector is adjusted based on whether the 3-dB bandwidth of the curve corresponding to the third scattering parameter falls within the preset range, thereby implementing impedance matching between the laser diode driver and the optical module. This helps improve communication performance of the optical assembly.

Referring to FIG. 4, an embodiment of the present invention provides an optical assembly 30', including an optical module 31' and a communications board 33'. The optical module 31' differs from the optical module 31 in the embodiment shown in FIG. 3 in that the first memory 313 is configured to store an operating parameter of the optical component 311. In this embodiment, the operating parameter includes a preset eye mask margin, a bias current, a modulated current, a modulated voltage, an operating temperature, a backlight diode current, and a monitor photodiode current.

The communications board 33' differs from the communications board 33 in the embodiment shown in FIG. 3 in that an electronic chip 333' that is on the communications board 33' and that corresponds to the optical component 311 further includes an eye opening monitoring module 3336. The eye opening monitoring module 3336 is connected to the micro controller 3331, and is electrically connected to the optical module 31' by using the connector.

The eye opening monitoring module 3336 is configured to: read an electrical signal output by a monitor photodiode (not shown in the figure) in the optical component 311, and measure, based on the electrical signal, an eye opening of a signal transmitted by the optical component 311.

The micro controller 3331 is configured to: read the operating parameter from the first memory 313, and configure the laser diode driver 3332 and the limiting amplifier 3333 based on the operating parameter. The micro controller 3331 is further configured to: read the eye opening, and adjust matched impedance of the matching network 335 based on the eye opening and the preset eye mask margin in the operating parameter.

It can be understood that for a connection relationship between the optical module 31' and the components on the communications board 33' and functions thereof, refer to related descriptions in the embodiment shown in FIG. 3. Details are not described herein again.

In an implementation, the adjusting matched impedance of the matching network based on the eye opening and the preset eye mask margin includes:

calculating, based on the eye opening, an eye mask margin of the signal transmitted by the optical component;

determining whether the eye mask margin of the signal transmitted by the optical component falls within a preset eye mask margin range; and

if the eye mask margin of the signal transmitted by the optical component falls outside the preset eye mask margin range, adjusting matched impedance of the optical assembly by adjusting a value of a resistor, an inductor, or a capacitor in the matching network on the communications board.

It can be understood that the eye opening of the signal transmitted by the optical component is measured, and the eye mask margin of the signal transmitted by the optical component is calculated based on the eye opening and a preset eye pattern mask. Further, whether the eye mask margin of the signal transmitted by the optical component falls within the preset eye mask margin range is determined. If the eye mask margin of the signal transmitted by the optical component falls within the preset eye mask margin range, it indicates that quality of the signal transmitted by the optical component meets a requirement. In other words, current matched impedance of the matching network already meets an impedance matching requirement, so that no adjustment is needed. If the eye mask margin of the signal transmitted by the optical component falls outside the preset eye mask margin range, it indicates that quality of the signal transmitted by the optical component does not meet a requirement, so that the matched impedance of the matching network needs to be adjusted, to improve the quality of the transmitted signal.

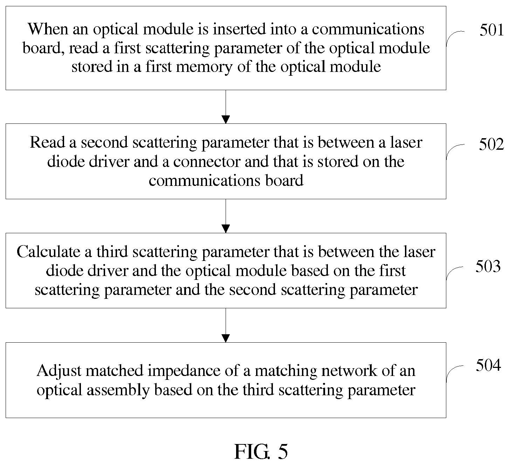

Referring to FIG. 5, an embodiment of the present invention provides a method for adjusting matched impedance of the optical assembly 30 in the embodiment shown in FIG. 3. The method includes the following steps:

Step 501: When an optical module is inserted into a communications board, read a first scattering parameter of the optical module stored in a first memory of the optical module.

Step 502: Read a second scattering parameter that is between a laser diode driver and a connector and that is stored on the communications board.

Step 503: Calculate a third scattering parameter that is between the laser diode driver and the optical module based on the first scattering parameter and the second scattering parameter.

Step 504: Adjust matched impedance of a matching network of the optical assembly based on the third scattering parameter.

In an implementation, the calculating a third scattering parameter that is between the laser diode driver and the optical module based on the first scattering parameter and the second scattering parameter includes:

converting the first scattering parameter into a corresponding first scattering transmission parameter, and converting the second scattering parameter into a second scattering transmission parameter;

multiplying the first scattering transmission parameter by the second scattering transmission parameter, to obtain a third scattering transmission parameter; and

converting the third scattering transmission parameter into the corresponding third scattering parameter.

In an implementation, the adjusting matched impedance of a matching network of the optical assembly based on the third scattering parameter includes:

calculating a 3-dB bandwidth of a curve corresponding to the third scattering parameter;

determining whether the 3-dB bandwidth of the curve corresponding to the third scattering parameter falls within a preset 3-dB bandwidth range; and

if the 3-dB bandwidth of the curve corresponding to the third scattering parameter falls outside the preset 3-dB bandwidth range, adjusting the matched impedance of the optical assembly by adjusting a value of a resistor, an inductor, or a capacitor in the matching network on the communications board.

It can be understood that for specific implementations of the steps in the method for adjusting matched impedance described in this embodiment, refer to related descriptions in the embodiment shown in FIG. 3. Details are not described herein again.

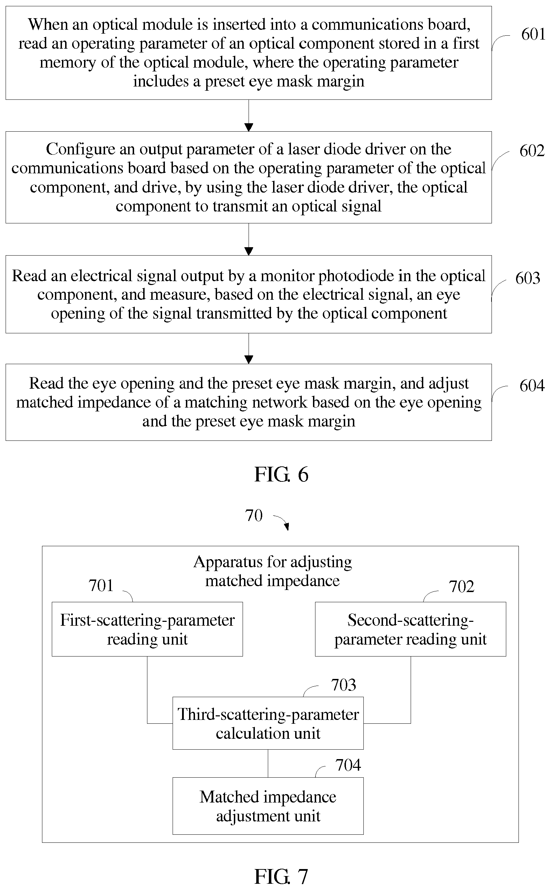

Referring to FIG. 6, an embodiment of the present invention provides a method for adjusting matched impedance of the optical assembly 30' in the embodiment shown in FIG. 4. The method includes the following steps:

Step 601: When an optical module is inserted into a communications board, read an operating parameter of an optical component stored in a first memory of the optical module, where the operating parameter includes a preset eye mask margin.

Step 602: Configure an output parameter of a laser diode driver on the communications board based on the operating parameter of the optical component, and drive, by using the laser diode driver, the optical component to transmit an optical signal.

Step 603: Read an electrical signal output by a monitor photodiode in the optical component, and measure, based on the electrical signal, an eye opening of the signal transmitted by the optical component.

Step 604: Read the eye opening and the preset eye mask margin, and adjust matched impedance of the matching network based on the eye opening and the preset eye mask margin.

In an implementation, the adjusting matched impedance of the matching network based on the eye opening and the preset eye mask margin includes:

calculating, based on the eye opening, an eye mask margin of the signal transmitted by the optical component;

determining whether the eye mask margin of the signal transmitted by the optical component falls within a preset eye mask margin range; and

if the eye mask margin of the signal transmitted by the optical component falls outside the preset eye mask margin range, adjusting the matched impedance of the optical assembly by adjusting a value of a resistor, an inductor, or a capacitor in the matching network on the communications board.

It can be understood that for specific implementations of the steps in the method for adjusting matched impedance described in this embodiment, refer to related descriptions in the embodiments shown in FIG. 3 and FIG. 4. Details are not described herein again.

Referring to FIG. 7, an embodiment of the present invention provides an apparatus 70 for adjusting matched impedance of the optical assembly 30 in the embodiment shown in FIG. 3. The apparatus includes:

a first-scattering-parameter reading unit 701, configured to: when an optical module is inserted into a communications board, read a first scattering parameter of the optical module stored in a first memory of the optical module;

a second-scattering-parameter reading unit 702, configured to read a second scattering parameter that is between a laser diode driver and a connector and that is stored on the communications board;

a third-scattering-parameter calculation unit 703, configured to calculate a third scattering parameter that is between the laser diode driver and the optical module based on the first scattering parameter and the second scattering parameter; and

a matched impedance adjustment unit 704, configured to adjust matched impedance of a matching network of the optical assembly based on the third scattering parameter.

In an implementation, the third-scattering-parameter calculation unit 703 is specifically configured to:

convert the first scattering parameter into a corresponding first scattering transmission parameter, and convert the second scattering parameter into a second scattering transmission parameter;

multiply the first scattering transmission parameter by the second scattering transmission parameter, to obtain a third scattering transmission parameter; and

convert the third scattering transmission parameter into the corresponding third scattering parameter.

In an implementation, the matched impedance adjustment unit 704 is specifically configured to:

calculate a 3-dB bandwidth of a curve corresponding to the third scattering parameter;

determine whether the 3-dB bandwidth of the curve corresponding to the third scattering parameter falls within a preset 3-dB bandwidth range; and

if the 3-dB bandwidth of the curve corresponding to the third scattering parameter falls outside the preset 3-dB bandwidth range, adjust the matched impedance of the optical assembly by adjusting a value of a resistor, an inductor, or a capacitor in the matching network on the communications board.

It can be understood that for functions and specific implementations of the constituent units of the apparatus 70 for adjusting matched impedance described in this embodiment, refer to related descriptions in the embodiment shown in FIG. 3. Details are not described herein again.

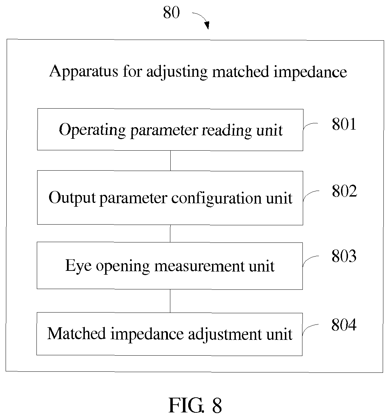

Referring to FIG. 8, an embodiment of the present invention provides an apparatus 80 for adjusting matched impedance of the optical assembly 30' in the embodiment shown in FIG. 4. The apparatus includes:

an operating parameter reading unit 801, configured to: when an optical module is inserted into a communications board, read an operating parameter of an optical component stored in a first memory of the optical module, where the operating parameter includes a preset eye mask margin;

an output parameter configuration unit 802, configured to configure an output parameter of a laser diode driver on the communications board based on the operating parameter of the optical component, and drive, by using the laser diode driver, the optical component to transmit an optical signal;

an eye opening measurement unit 803, configured to: read an electrical signal output by a monitor photodiode in the optical component, and measure, based on the electrical signal, an eye opening of the signal transmitted by the optical component; and

a matched impedance adjustment unit 804, configured to: read the eye opening and the preset eye mask margin, and adjust matched impedance of the matching network based on the eye opening and the preset eye mask margin.

In an implementation, the matched impedance adjustment unit 804 is specifically configured to:

calculate, based on the eye opening, an eye mask margin of the signal transmitted by the optical component; determine whether the eye mask margin of the signal transmitted by the optical component falls within a preset eye mask margin range; and

if the eye mask margin of the signal transmitted by the optical component falls outside the preset eye mask margin range, adjust the matched impedance of the optical assembly by adjusting a value of a resistor, an inductor, or a capacitor in the matching network on the communications board.

It can be understood that for functions and specific implementations of the constituent units of the apparatus 80 for adjusting matched impedance described in this embodiment, refer to related descriptions in the embodiments shown in FIG. 3 and FIG. 4. Details are not described herein again.

## Claims

1. An optical assembly (30, 40), comprising an optical module (31) and a communications board (33), wherein an optical component (311), a first memory (313), and an edge connector (315) connected to the optical component and the first memory are disposed on the optical module, and the first memory is configured to store a first scattering parameter of the optical module and an operating parameter of the optical component;
a connector, and an electronic chip (333) and a matching network (335) that correspond to the optical component are disposed on the communications board, and the optical module is connected to the connector by using the edge connector;
the electronic chip comprises a micro controller (3331) and a laser diode driver (3332), the laser diode driver is connected to the connector via the matching network, and the communications board stores a second scattering parameter that is between the laser diode driver and the connector; and
the micro controller is configured to: read the first scattering parameter from the first memory, calculate a third scattering parameter that is between the laser diode driver and the optical module based on the first scattering parameter and the second scattering parameter, and further adjust matched impedance of the matching network based on the third scattering parameter.

2. The optical assembly according to claim 1, wherein the electronic chip further comprises:

an avalanche photodiode bias chip, configured to provide a bias voltage for the optical component;
a limiting amplifier, configured to amplify a signal received by the optical component; and
a thermoelectric cooler control chip, configured to provide a cooling current or a heating current for the optical module.

3. The optical assembly according to claim 2, wherein the operating parameter of the optical component comprises a bias current, a modulated current, a modulated voltage, an operating temperature, and a backlight diode current; the micro controller is further configured to: read the operating parameter from the first memory and configure the laser diode driver and the limiting amplifier based on the operating parameter; and the laser diode driver is configured to drive the optical component to transmit an optical signal.

4. The optical assembly according to any one of claims 1 to 3, wherein the calculating a third scattering parameter that is between the laser diode driver and the optical module based on the first scattering parameter and the second scattering parameter comprises:

converting the first scattering parameter into a corresponding first scattering transmission parameter, and converting the second scattering parameter into a second scattering transmission parameter;
multiplying the first scattering transmission parameter by the second scattering transmission parameter, to obtain a third scattering transmission parameter; and

converting the third scattering transmission parameter into the corresponding third scattering parameter.

5. The optical assembly according to any one of claims 1 to 3, wherein the matching network comprises one or a combination of more of a resistor, an inductor, and a capacitor connected in series and/or connected in parallel, and the adjusting matched impedance of the matching network is adjusting a value of the resistor, the inductor, or the capacitor.

6. The optical assembly according to any one of claims 1 to 3, wherein the optical component comprises a bidirectional optical subassembly, BOSA, or the optical component comprises a transmitter optical subassembly, TOSA, and a receiver optical subassembly, ROSA.

7. An optical assembly, comprising an optical module and a communications board, wherein
an optical component, a first memory, and an edge connector connected to the optical component and the first memory are disposed on the optical module, the first memory is configured to store an operating parameter of the optical component, and the operating parameter comprises a preset eye mask margin;
a connector, and an electronic chip and a matching network that correspond to the optical component are disposed on the communications board, and the optical module is connected to the connector by using the edge connector;
the electronic chip comprises a micro controller, a laser diode driver, and an eye opening monitoring module; the micro controller is electrically connected to the laser diode driver, the eye opening monitoring module, and the matching network; and the laser diode driver is connected to the connector via the matching network;
the eye opening monitoring module is configured to: read an electrical signal output by a monitor photodiode in the optical component, and measure, based on the electrical signal, an eye opening of a signal transmitted by the optical component; and
the micro controller is configured to: read the eye opening and the preset eye mask margin, and adjust matched impedance of the matching network based on the eye opening and the preset eye mask margin.

8. The optical assembly according to claim 7, wherein the electronic chip further comprises:

an avalanche photodiode bias chip, configured to provide a bias voltage for the optical component;
a limiting amplifier, configured to amplify a signal received by the optical component; and
a thermoelectric cooler control chip, configured to provide a cooling current or a heating current for the optical module.

9. The optical assembly according to claim 8, wherein the operating parameter of the optical component further comprises a bias current, a modulated current, a modulated voltage, an operating temperature, a backlight diode current, and a monitor photodiode current; the micro controller is further configured to configure the laser diode driver and the limiting amplifier based on the operating parameter; and the laser diode driver is configured to drive the optical component to transmit an optical signal.

10. The optical assembly according to any one of claims 7 to 9, wherein the matching network comprises one or a combination of more of a resistor, an inductor, and a capacitor connected in series and/or connected in parallel, and the adjusting matched impedance of the matching network is adjusting a value of the resistor, the inductor, or the capacitor.

11. The optical assembly according to any one of claims 7 to 9, wherein the optical component comprises a bidirectional optical subassembly, BOSA, or the optical component comprises a transmitter optical subassembly, TOSA and a receiver optical subassembly, ROSA.

12. A passive optical network system, comprising an optical line terminal, an optical distribution network, and an optical network unit, wherein the optical line terminal is connected to the optical network unit via the optical distribution network, and the optical line terminal comprises the optical assembly according to any one of claims 1 to 6, and/or the optical network unit comprises the optical assembly according to any one of claims 7 to 11.

13. A method for adjusting matched impedance of the optical assembly according to any one of claims 1 to 6, comprising:

when an optical module is inserted into a communications board, reading a first scattering parameter of the optical module stored in a first memory of the optical module;

reading a second scattering parameter that is between a laser diode driver and a connector and that is stored on the communications board;

calculating a third scattering parameter that is between the laser diode driver and the optical module based on the first scattering parameter and the second scattering parameter; and

adjusting matched impedance of a matching network of the optical assembly based on the third scattering parameter.

14. The method according to claim 13, wherein the calculating a third scattering parameter that is between the laser diode driver and the optical module based on the first scattering parameter and the second scattering parameter comprises:

converting the first scattering parameter into a corresponding first scattering transmission parameter, and converting the second scattering parameter into a second scattering transmission parameter;

multiplying the first scattering transmission parameter by the second scattering transmission parameter, to obtain a third scattering transmission parameter; and

converting the third scattering transmission parameter into the corresponding third scattering parameter.

15. The method according to claim 13, wherein the adjusting matched impedance of a matching network of the optical assembly based on the third scattering parameter comprises:

calculating a 3-dB bandwidth of a curve corresponding to the third scattering parameter;

determining whether the 3-dB bandwidth of the curve corresponding to the third scattering parameter falls within a preset 3-dB bandwidth range; and

if the 3-dB bandwidth of the curve corresponding to the third scattering parameter falls outside the preset 3-dB bandwidth range, adjusting the matched impedance of the optical assembly by adjusting a value of a resistor, an inductor, or a capacitor in the matching network on the communications board.

**Patentansprüche**

1. Optische Anordnung (30, 40), umfassend ein optisches Modul (31) und eine Kommunikationsplatine (33), wobei eine optische Komponente (311), ein erster Speicher (313) und ein mit der optischen Komponente und dem ersten Speicher verbundener Steckverbinder (315) auf dem optischen Modul angeordnet sind, und der erste Speicher konfiguriert ist, um einen ersten Streuparameter des optischen Moduls und einen Betriebsparameter der optischen Komponente zu speichern;

ein Verbinder und ein elektronischer Chip (333) und ein Anpassungsnetzwerk (335), die der optischen Komponente entsprechen, auf der Kommunikationsplatine angeordnet sind, und das optische Modul durch Verwenden des Steckverbinders mit dem Verbinder verbunden ist;

der elektronische Chip einen Mikrocontroller (3331) und einen Laserdiodentreiber (3332) umfasst, der Laserdiodentreiber über das Anpassungsnetzwerk mit dem Verbinder verbunden ist, und die Kommunikationsplatine einen zweiten Streuparameter speichert, der zwischen dem Laserdiodentreiber und dem Verbinder liegt, und

der Mikrocontroller zu Folgendem konfiguriert ist: Auslesen des ersten Streuparameters aus dem ersten Speicher, Berechnen eines dritten Streuparameters, der zwischen dem Laserdiodentreiber und dem optischen Modul basierend auf dem ersten Streuparameter und dem zweiten Streuparameter liegt, und ferner Angleichen der angepassten Impedanz des Anpassungsnetzwerks basierend auf dem dritten Streuparameter.

2. Optische Anordnung nach Anspruch 1, wobei der elektronische Chip ferner Folgendes umfasst:

einen Lawinenfotodioden-Vorspannungschip, der konfiguriert ist, um eine Vorspannung für die optische Komponente bereitzustellen;

einen Begrenzungsverstärker, der konfiguriert ist, um ein durch die optische Komponente empfangenes Signal zu verstärken; und

einen Steuerchip für einen thermoelektrischen Kühler, der konfiguriert ist, um einen Kühlstrom oder einen Heizstrom für das optische Modul bereitzustellen.

3. Optische Anordnung nach Anspruch 2, wobei der Betriebsparameter der optischen Komponente einen Vorspannungsstrom, einen modulierten Strom, eine modulierte Spannung, eine Betriebstemperatur und einen Hintergrundbeleuchtungsdiodenstrom umfasst; der Mikrocontroller ferner zu Folgendem konfiguriert ist: Auslesen des Betriebsparameters aus dem ersten Speicher und Konfigurieren des Laserdiodentreibers und des Begrenzungsverstärkers basierend auf dem Betriebsparameter; und wobei der Laserdiodentreiber konfiguriert ist, um die optische Komponente zu treiben, um ein optisches Signal zu übertragen.

4.  Optische Anordnung nach einem der Ansprüche 1 bis 3, wobei das Berechnen eines dritten Streuparameters, der zwischen dem Laserdiodentreiber und dem optischen Modul liegt, basierend auf dem ersten Streuparameter und dem zweiten Streuparameter Folgendes umfasst:

> Umwandeln des ersten Streuparameters in einen entsprechenden ersten Streuübertragungsparameter, und Umwandeln des zweiten Streuparameters in einen zweiten Streuübertragungsparameter;
> Multiplizieren des ersten Streuübertragungsparameters mit dem zweiten Streuübertragungsparameter, um einen dritten Streuübertragungsparameter zu erhalten; und
> Umwandeln des dritten Streuungsübertragungsparameters in den entsprechenden dritten Streuparameter.

5.  Optische Anordnung nach einem der Ansprüche 1 bis 3, wobei das Anpassungsnetzwerk einen oder eine Kombination aus einem Widerstand, einer Induktivität und einem Kondensator umfasst, die in Reihe geschaltet und/oder parallel geschaltet sind, und die angleichende angepasste Impedanz des Anpassungsnetzwerks einen Wert des Widerstands, der Induktivität oder des Kondensators angleicht.

6.  Optische Anordnung nach einem der Ansprüche 1 bis 3, wobei die optische Komponente eine bidirektionale optische Untergruppe (*bidirectional optical subassembly*- BOSA) umfasst oder die optische Komponente eine optische Senderuntergruppe (*transmitter optical subassembly* - TOSA) und eine optische Empfängeruntergruppe (*receiver optical subassembly* - ROSA) umfasst.

7.  Optische Anordnung, umfassend ein optisches Modul und eine Kommunikationsplatine, wobei
    eine optische Komponente, ein erster Speicher und ein mit der optischen Komponente verbundener Steckverbinder und der erste Speicher auf dem optischen Modul angeordnet sind, wobei der erste Speicher konfiguriert ist, um einen Betriebsparameter der optischen Komponente zu speichern, und der Betriebsparameter einen voreingestellten Augenmaskenrand umfasst;
    ein Verbinder und ein elektronischer Chip und ein Anpassungsnetzwerk, die der optischen Komponente entsprechen, auf der Kommunikationsplatine angeordnet sind, und das optische Modul durch Verwenden des Steckverbinders mit dem Verbinder verbunden ist;
    der elektronische Chip einen Mikrocontroller, einen Laserdiodentreiber und ein Augenöffnungsüberwachungsmodul umfasst; der Mikrocontroller mit dem Laserdiodentreiber, dem Augenöffnungsüberwachungsmodul und dem Anpassungsnetzwerk elektrisch verbunden ist; und der Laserdiodentreiber über das Anpassungsnetzwerk mit dem Verbinder verbunden ist;
    das Augenöffnungsüberwachungsmodul zu Folgendem konfiguriert ist: Auslesen eines durch eine Überwachungsfotodiode in der optischen Komponente ausgegebenen elektrischen Signals und basierend auf dem elektrischen Signal, Messen einer Augenöffnung eines durch die optische Komponente übertragenen Signals; und
    der Mikrocontroller zu Folgendem konfiguriert ist: Auslesen der Augenöffnung und des voreingestellten Augenmaskenrands und Angleichen der angepassten Impedanz des Anpassungsnetzwerks basierend auf der Augenöffnung und dem voreingestellten Augenmaskenrand.

8.  Optische Anordnung nach Anspruch 7, wobei der elektronische Chip ferner Folgendes umfasst:

> einen Lawinenfotodioden-Vorspannungschip, der konfiguriert ist, um eine Vorspannung für die optische Komponente bereitzustellen;
> einen Begrenzungsverstärker, der konfiguriert ist, um ein durch die optische Komponente empfangenes Signal zu verstärken; und
> einen Steuerchip für einen thermoelektrischen Kühler, der konfiguriert ist, um einen Kühlstrom oder einen Heizstrom für das optische Modul bereitzustellen.

9.  Optische Anordnung nach Anspruch 8, wobei der Betriebsparameter der optischen Komponente ferner einen Vorspannungsstrom, einen modulierten Strom, eine modulierte Spannung, eine Betriebstemperatur, einen Hintergrundbeleuchtungsdiodenstrom und einen Überwachungsfotodiodenstrom umfasst; der Mikrocontroller ferner konfiguriert ist, um den Laserdiodentreiber und den Begrenzungsverstärker basierend auf dem Betriebsparameter zu konfigurieren; und der Laserdiodentreiber konfiguriert ist, um die optische Komponente zu treiben, um ein optisches Signal zu übertragen.

**10.** Optische Anordnung nach einem der Ansprüche 7 bis 9, wobei das Anpassungsnetzwerk einen oder eine Kombination aus einem Widerstand, einer Induktivität und einem Kondensator umfasst, die in Reihe geschaltet und/oder parallel geschaltet sind, und die angleichende angepasste Impedanz des Anpassungsnetzwerks einen Wert des Widerstands, der Induktivität oder des Kondensators angleicht.

**11.** Optische Anordnung nach einem der Ansprüche 7 bis 9, wobei die optische Komponente eine bidirektionale optische Untergruppe (BOSA) umfasst oder die optische Komponente eine optische Senderuntergruppe (TOSA) und eine optische Empfängeruntergruppe (ROSA) umfasst.

**12.** Passives optisches Netzwerksystem, umfassend ein optisches Leitungsendgerät, ein optisches Verteilungsnetzwerk und eine optische Netzwerkeinheit, wobei das optische Leitungsendgerät über das optische Verteilungsnetzwerk mit der optischen Netzwerkeinheit verbunden ist, und das optische Leitungsendgerät die optische Anordnung nach einem der Ansprüche 1 bis 6 umfasst und/oder die optische Netzwerkeinheit die optische Anordnung nach einem der Ansprüche 7 bis 11 umfasst.

**13.** Verfahren zum Angleichen der angepassten Impedanz der optischen Anordnung nach einem der Ansprüche 1 bis 6, Folgendes umfassend:

wenn ein optisches Modul in eine Kommunikationsplatine eingesetzt wird, Auslesen eines ersten Streuparameters des in einem ersten Speicher des optischen Moduls gespeicherten optischen Moduls;
Auslesen eines zweiten Streuparameters, der zwischen einem Laserdiodentreiber und einem Verbinder liegt und auf der Kommunikationsplatine gespeichert ist;
Berechnen eines dritten Streuparameters, der zwischen dem Laserdiodentreiber und dem optischen Modul liegt, basierend auf dem ersten Streuparameter und dem zweiten Streuparameter; und
Angleichen der angepassten Impedanz eines Anpassungsnetzwerks der optischen Anordnung basierend auf dem dritten Streuparameter.

**14.** Verfahren nach Anspruch 13, wobei das Berechnen eines dritten Streuparameters, der zwischen dem Laserdiodentreiber und dem optischen Modul liegt, basierend auf dem ersten Streuparameter und dem zweiten Streuparameter, Folgendes umfasst:

Umwandeln des ersten Streuparameters in einen entsprechenden ersten Streuübertragungsparameter, und Umwandeln des zweiten Streuparameters in einen zweiten Streuübertragungsparameter;
Multiplizieren des ersten Streuübertragungsparameters mit dem zweiten Streuübertragungsparameter, um einen dritten Streuübertragungsparameter zu erhalten; und
Umwandeln des dritten Streuungsübertragungsparameters in den entsprechenden dritten Streuparameter.

**15.** Verfahren nach Anspruch 13, wobei das Angleichen der angepassten Impedanz eines Anpassungsnetzwerks der optischen Anordnung, basierend auf dem dritten Streuparameter, Folgendes umfasst:

Berechnen einer 3-dB-Bandbreite einer dem dritten Streuparameter entsprechenden Kurve;
Bestimmen, ob die 3-dB-Bandbreite der dem dritten Streuparameter entsprechenden Kurve innerhalb eines voreingestellten 3-dB-Bandbreitenbereichs fällt; und
falls die 3-dB-Bandbreite der dem dritten Streuparameter entsprechenden Kurve außerhalb des voreingestellten 3-dB-Bandbreitenbereichs fällt, Angleichen der angepassten Impedanz der optischen Anordnung durch Angleichen eines Wertes eines Widerstands, einer Induktivität oder eines Kondensators in dem Anpassungsnetzwerk auf der Kommunikationsplatine.

## Revendications

**1.** Ensemble optique (30, 40), comprenant un module optique (31) et une carte de communications (33), dans lequel un composant optique (311), une première mémoire (313) et un connecteur plat (315) connectés au composant optique et à la première mémoire sont disposés sur le module optique, et la première mémoire est configurée pour stocker un premier paramètre de diffusion du module optique et un paramètre de fonctionnement du composant optique ;

un connecteur, et une puce électronique (333) et un réseau d'adaptation (335) qui correspondent au composant optique sont disposés sur la carte de communication, et le module optique est connecté au connecteur en utilisant le connecteur plat ;

la puce électronique comprend un microcontrôleur (3331) et un circuit d'attaque de diode laser (3332), le circuit d'attaque de diode laser est connecté au connecteur par l'intermédiaire du réseau d'adaptation, et la carte de communications stocke un deuxième paramètre de diffusion qui se trouve entre le circuit d'attaque de diode laser et le connecteur ; et

le microcontrôleur est configuré pour :

lire le premier paramètre de diffusion dans la première mémoire, calculer un troisième paramètre de diffusion qui se trouve entre le circuit d'attaque de diode laser et le module optique en fonction du premier paramètre de diffusion et du deuxième paramètre de diffusion, et ajuster en outre l'impédance adaptée du réseau correspondant en fonction du troisième paramètre de diffusion.

2. Ensemble optique selon la revendication 1, dans lequel la puce électronique comprend en outre :

une puce de polarisation de photodiode à avalanche, configurée pour fournir une tension de polarisation au composant optique ;
un amplificateur de limitation, configuré pour amplifier un signal reçu par le composant optique ; et
une puce de commande de refroidisseur thermoélectrique, configurée pour fournir un courant de refroidissement ou un courant de chauffage au module optique.

3. Ensemble optique selon la revendication 2, dans lequel le paramètre de fonctionnement du composant optique comprend un courant de polarisation, un courant modulé, une tension modulée, une température de fonctionnement et un courant de diode de rétroéclairage ;

le microcontrôleur est en outre configuré pour :

lire le paramètre de fonctionnement dans la première mémoire et configurer le circuit d'attaque de diode laser et l'amplificateur de limitation en fonction du paramètre de fonctionnement ; et
le circuit d'attaque de diode laser est configuré pour attaquer le composant optique afin d'émettre un signal optique.

4. Ensemble optique selon l'une quelconque des revendications 1 à 3, dans lequel le calcul d'un troisième paramètre de diffusion, qui se trouve entre le circuit d'attaque de diode laser et le module optique, en fonction du premier paramètre de diffusion et du deuxième paramètre de diffusion comprend :

la conversion du premier paramètre de diffusion en un premier paramètre d'émission de diffusion correspondant, et la conversion du deuxième paramètre de diffusion en un deuxième paramètre d'émission de diffusion ;
la multiplication du premier paramètre d'émission de diffusion par le troisième paramètre d'émission de diffusion, pour obtenir un troisième paramètre d'émission de diffusion ; et
la conversion du troisième paramètre d'émission de diffusion en troisième paramètre de diffusion correspondant.

5. Ensemble optique selon l'une quelconque des revendications 1 à 3, dans lequel le réseau d'adaptation comprend un élément ou une combinaison de plusieurs éléments parmi une résistance, un inducteur et un condensateur connectés en série et/ou connectés en parallèle, et l'impédance d'ajustement adaptée du réseau correspondant ajuste une valeur de la résistance, de l'inducteur ou du condensateur.

6. Ensemble optique selon l'une quelconque des revendications 1 à 3, dans lequel le composant optique comprend un sous-ensemble optique bidirectionnel, BOSA, ou le composant optique comprend un sous-ensemble optique émetteur, TOSA, et un sous-ensemble optique récepteur, ROSA.

7. Ensemble optique, comprenant un module optique et une carte de communication, dans lequel un composant optique, une première mémoire et un connecteur plat connecté au composant optique et à la première mémoire sont disposés sur le module optique, la première mémoire étant configurée pour stocker un paramètre de fonctionnement du composant optique, et le paramètre de fonctionnement comprend une marge de masque oculaire prédéfinie ;

un connecteur, et une puce électronique et un réseau d'adaptation qui correspondent au composant optique sont disposés sur la carte de communication, et le module optique est connecté au connecteur en utilisant le connecteur plat ;

la puce électronique comprend un microcontrôleur, un circuit d'attaque de diode laser et un module de surveillance d'ouverture des yeux ;

le microcontrôleur est connecté électriquement au circuit d'attaque de diode laser, au module de surveillance d'ouverture des yeux et au réseau d'adaptation ; et

le circuit d'attaque de diode laser est connecté au connecteur par l'intermédiaire du réseau correspondant ;

le module de surveillance de l'ouverture des yeux est configuré pour :

lire un signal électrique délivré par une photodiode de surveillance dans le composant optique, et mesurer, sen fonction du signal électrique, une ouverture oculaire d'un signal émis par le composant optique ; et

le microcontrôleur est configuré pour :

lire l'ouverture des yeux et la marge du masque oculaire prédéfinie, et ajuster l'impédance adaptée du réseau correspondant en fonction de l'ouverture des yeux et de la marge du masque oculaire prédéfinie.

8. Ensemble optique selon la revendication 7, dans lequel la puce électronique comprend en outre :

une puce de polarisation de photodiode à avalanche, configurée pour fournir une tension de polarisation au composant optique ;

un amplificateur de limitation, configuré pour amplifier un signal reçu par le composant optique ; et

une puce de commande de refroidisseur thermoélectrique, configurée pour fournir un courant de refroidissement ou un courant de chauffage au module optique.

9. Ensemble optique selon la revendication 8, dans lequel le paramètre de fonctionnement du composant optique comprend en outre un courant de polarisation, un courant modulé, une tension modulée, une température de fonctionnement, un courant de diode de rétroéclairage et un courant de photodiode de surveillance ;

le microcontrôleur est en outre configuré pour configurer le circuit d'attaque de diode laser et l'amplificateur de limitation en fonction du paramètre de fonctionnement ; et

le circuit d'attaque de diode laser est configuré pour attaquer le composant optique afin d'émettre un signal optique.

10. Ensemble optique selon l'une quelconque des revendications 7 à 9, dans lequel le réseau d'adaptation comprend un élément ou une combinaison de plusieurs éléments parmi une résistance, un inducteur et un condensateur connectés en série et/ou connectés en parallèle, et l'impédance d'ajustement adaptée du réseau correspondant ajuste une valeur de la résistance, de l'inducteur ou du condensateur.

11. Ensemble optique selon l'une quelconque des revendications 7 à 9, dans lequel le composant optique comprend un sous-ensemble optique bidirectionnel, BOSA, ou le composant optique comprend un sous-ensemble optique émetteur, TOSA, et un sous-ensemble optique récepteur, ROSA.

12. Système de réseau optique passif, comprenant un terminal de ligne optique, un réseau de distribution optique et une unité de réseau optique, dans lequel le terminal de ligne optique est connecté à l'unité de réseau optique par l'intermédiaire du réseau de distribution optique, et le terminal de ligne optique comprend l'ensemble optique selon l'une quelconque des revendications 1 à 6, et/ou l'unité de réseau optique comprend l'ensemble optique selon l'une quelconque des revendications 7 à 11.

13. Procédé pour ajuster l'impédance adaptée de l'ensemble optique selon l'une quelconque des revendications 1 à 6, comprenant :

lorsqu'un module optique est inséré dans une carte de communication, la lecture d'un premier paramètre de diffusion du module optique stocké dans une première mémoire du module optique ;

la lecture d'un deuxième paramètre de diffusion qui se trouve entre un circuit d'attaque de diode laser et un connecteur, et qui est stocké sur la carte de communication ;

le calcul d'un troisième paramètre de diffusion, qui se trouve entre le circuit d'attaque de diode laser et le module optique, en fonction du premier paramètre de diffusion et du deuxième paramètre de diffusion ; et

l'ajustement de l'impédance adaptée d'un réseau correspondant de l'ensemble optique en fonction du troisième paramètre de diffusion.

14. Procédé selon la revendication 13, dans lequel le calcul d'un troisième paramètre de diffusion, qui se trouve entre le circuit d'attaque de diode laser et le module optique, en fonction du premier paramètre de diffusion et du deuxième paramètre de diffusion comprend :

la conversion du premier paramètre de diffusion en un premier paramètre d'émission de diffusion correspondant, et la conversion du deuxième paramètre de diffusion en un deuxième paramètre d'émission de diffusion ;
la multiplication du premier paramètre d'émission de diffusion par le troisième paramètre d'émission de diffusion, pour obtenir un troisième paramètre d'émission de diffusion ; et
la conversion du troisième paramètre d'émission de diffusion en troisième paramètre de diffusion correspondant.

15. Procédé selon la revendication 13, dans lequel l'ajustement de l'impédance adaptée d'un réseau correspondant de l'ensemble optique en fonction du troisième paramètre de diffusion comprend :

le calcul d'une largeur de bande de 3 dB d'une courbe correspondant au troisième paramètre de diffusion ;
la détermination du fait de savoir si la largeur de bande de 3 dB de la courbe correspondant au troisième paramètre de diffusion se situe dans une plage de largeur de bande prédéfinie de 3 dB ; et
si la largeur de bande de 3 dB de la courbe correspondant au troisième paramètre de diffusion se situe en dehors de la plage de largeur de bande prédéfinie de 3 dB, l'ajustement de l'impédance adaptée de l'ensemble optique en ajustant une valeur d'une résistance, d'un inducteur ou d'un condensateur dans le réseau correspondant sur la carte de communication.

FIG. 1

FIG. 2

30

33

Communications board

3331    335    331    31

MCU    LDD    Matching network    Connector    Optical module

3332    BOSA    311

LA    Flash    313

3333    315

333

APD bias chip

3334

TEC controller

3335

FIG. 3

FIG. 4

When an optical module is inserted into a communications board, read a first scattering parameter of the optical module stored in a first memory of the optical module | 501

Read a second scattering parameter that is between a laser diode driver and a connector and that is stored on the communications board | 502

Calculate a third scattering parameter that is between the laser diode driver and the optical module based on the first scattering parameter and the second scattering parameter | 503

Adjust matched impedance of a matching network of an optical assembly based on the third scattering parameter | 504

FIG. 5

When an optical module is inserted into a communications board, read an operating parameter of an optical component stored in a first memory of the optical module, where the operating parameter includes a preset eye mask margin ⟋ 601

↓

Configure an output parameter of a laser diode driver on the communications board based on the operating parameter of the optical component, and drive, by using the laser diode driver, the optical component to transmit an optical signal ⟋ 602

↓

Read an electrical signal output by a monitor photodiode in the optical component, and measure, based on the electrical signal, an eye opening of the signal transmitted by the optical component ⟋ 603

↓

Read the eye opening and the preset eye mask margin, and adjust matched impedance of a matching network based on the eye opening and the preset eye mask margin ⟋ 604

FIG. 6

70 ↘

Apparatus for adjusting matched impedance

701 ↘                                      ⟋ 702

First-scattering-parameter reading unit         Second-scattering-parameter reading unit

⟋ 703

Third-scattering-parameter calculation unit

⟋ 704

Matched impedance adjustment unit

FIG. 7

80

Apparatus for adjusting matched impedance

Operating parameter reading unit — 801

Output parameter configuration unit — 802

Eye opening measurement unit — 803

Matched impedance adjustment unit — 804

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106059673 A